# EUROPEAN PATENT APPLICATION

(11) **EP 2 839 986 A1**
(43) Date of publication of application: **25.02.2015**
(21) Application number: 12874520.5
(22) Date of filing: 16.04.2012
(51) Int. Cl.: B60N 2/48, A47C 7/38

(54) **HEAD REST**

(71) Applicant: Johnson Controls Technology Company, Holland, MI 49423 (US)
(72) Inventor: CHIYOSHI, Toyoharu, Yokohama-shi, Kanagawa 220-0012 (JP); TAKATA, Naoyuki, Yokohama-shi, Kanagawa 220-0012 (JP)
(74) Representative: Liedhegener, Ralf
(86) International application number: PCT/JP2012/060232
(87) International publication number: WO 2013/157068

(57) **Abstract**

An opening (10) for a stay (6, 6) to be inserted into a surface skin (5) of a head rest (4) is formed in the surface skin (5). An end part (9) of the opening (10) arranged around the stay (6, 6) is formed to be raised from a lower surface part (5a) of the surface skin (5) and come into contact with the stay (6, 6).

## Description

### Technical Field

The present invention relates to a head rest provided at an upper end part of a seat.

### Background Art

A related head rest is described in Patent Literature 1. This head rest includes: stays supported in an upper end part of a seat and having a predetermined width in the left-right direction; a support fixed to the stays; a hollow surface skin provided on upper end parts of the stays and formed in such a size as to be capable of supporting, from the rear side, the head of the seater leaning back against the seat; and a pad which is a synthetic resin liquid filled in the space between the stays and the support and the surface skin and configured to provide predetermined resilience to the surface skin when foamed.

### Citation List

### Patent Literature

PTL 1: Japanese Utility Model Registration Application Publication No. Hei 7-27358

### Summary of Invention

Here, in this related technique, an opening is formed in the lower side of the surface skin for inserting the stays and the support to the inside of the surface skin. For this reason, the edge of the opening tends to be turned outward by the pressure resulting from the foaming of the pad (hereinafter, referred to as the foaming pressure). With the edge turned outward, debris of the foamable material may come out and the debris may attach to the outer side of the surface skin and the stays, which may not only impair the appearance but also lower the quality of commodities. Removing the debris requires man-hours, which may be a cause of increase in cost.

An object of the present invention is to provide a head rest capable of achieving good appearance, improved quality of commodities, and cost reduction.

An aspect of the present invention is a head rest, including: a stay supported on an upper end part of a seat; a hollow surface skin arranged on an upper end part of the stay and formed to have a size capable of supporting a head of a seater leaning back against the seat from a rear side of the head; and a pad formed by foaming of a foamable material made of a synthetic resin injected in a space between the upper end part of the stay and the surface skin, and configured to provide resilience to the surface skin, wherein in a lower surface part of the surface skin, the surface skin has an opening for the stay to be inserted into the surface skin, and the opening has an end part is arranged around the stay and formed to be raised from the lower surface part of the surface skin and come into contact with the stay.

According to the above aspect, even when the foaming pressure of the foamable material of the pad increases, the end part of the opening interferes with the stay, thereby stopping the surface skin from moving any further. Thus, the formable material of the pad does not go over the surface skin and come out. Since the formable material does not come out, there is not any "debris, " which would be formed if the formable material comes out. Thus, good appearance and improved quality of commodities are achieved. Since removal of debris is not needed, no man-hour for such work is needed either. This brings about a practical advantage that the cost can be reduced.

The end part may have an edge surface configured to come into endless contact with the stay.

According to the above configuration, the edge surface of the end part of the opening is in endless contact with the stay. Thus, even when the foaming pressure of the foamable material of the pad increases, movement of the surface skin can further be suppressed. Accordingly, it is possible to more reliably prevent the foamable material from coming out of the surface skin.

The end part may have: an inclined surface inclined with respect to an axis direction of the stay; and an edge surface located at an edge of the end part on a raised side being one end of the inclined surface, and configured to come into endless contact with an outer peripheral surface of the stay.

According to the above configuration, the end part of the opening has the inclined surface, and the edge surface which is one end of the incline surface is in endless contact with the stay. Thus, even when the foaming pressure of the foamable material of the pad increases, movement of the surface skin can further be suppressed. Accordingly, it is possible to more reliably prevent the foamable material from coming out of the surface skin.

The stay may be in a columnar shape, and the end part may be in a ring shape.

According to the above configuration, the foaming pressure of the foamable material is applied move evenly to the end part. Thus, movement of the surface skin can further be suppressed. Accordingly, it is possible to more reliably prevent the foamable material from coming out of the surface skin.

The foamable material may be made of a synthetic resin.

According to the above configuration, it is possible to use a foamable material made of an expensive synthetic resin.

### Brief Description of Drawings

Fig. 1 is a perspective, three-quarter view illustrating a vehicle seat to which a head rest according to one embodiment of the present invention is mounted.
Fig. 2 is an enlarged view illustrating the head rest in Fig. 1 pulled out of the seat and turned upside down.
Fig. 3 is an enlarged view taken along line III-III in Fig. 2.

### Description of Embodiment

The object of providing a head rest which capable of achieving better appearance, improved quality of commodities, and cost reduction is achieved with the following configuration. Specifically, the configuration includes: a stay supported on an upper end part of a seat; a hollow surface skin arranged on an upper end part of the stay and formed to have a size capable of supporting a head of a seater leaning back against the seat from a rear side of the head; and a pad formed by foaming of a foamable material injected in a space between the upper end part of the stay and the surface skin, and configured to provide resilience to the surface skin. In a lower surface part of the surface skin, the surface skin has an opening for the stay to be inserted into the surface skin, and the opening has an end part is arranged around the stay and formed to be raised from the lower surface part of the surface skin and come into contact with the stay.

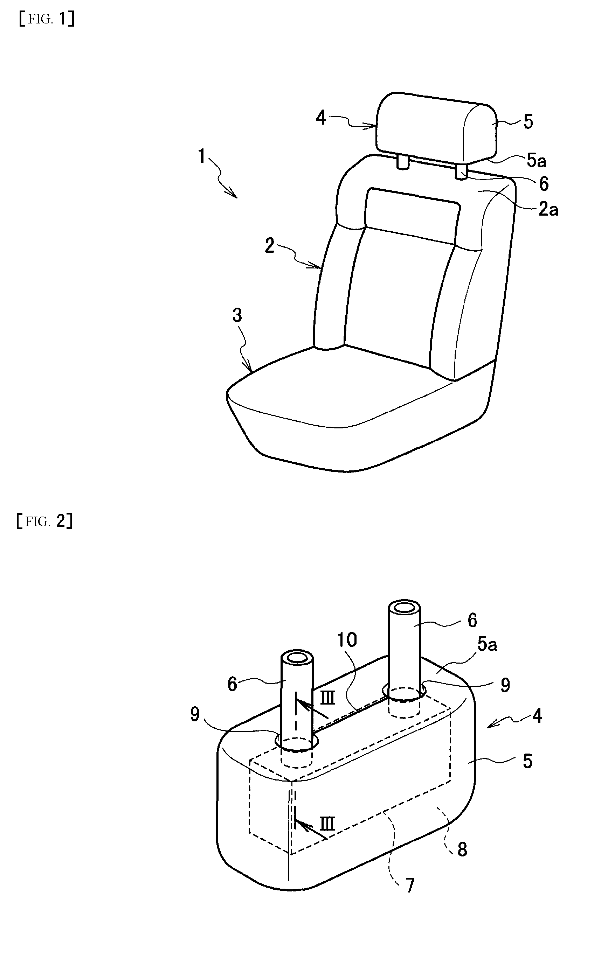

Hereinbelow, one embodiment of the present invention will be described with reference to Figs. 1 to 3. As illustrated in Fig. 1, a vehicle seat 1 includes a seat back 2, a seat cushion 3, and a head rest 4. The seat cushion 3 is supported on an unillustrated vehicle body with publically known means.

The head rest 4 according to the one embodiment of the present invention includes columnar stays 6, 6, a core member 7, a surface skin 5, and a pad 8. The stays 6, 6 are supported by a publically known holder (not illustrated) provided in an upper end part 2a of the seat back 2 of the vehicle seat 1 so that the stays 6, 6 can slide vertically but be fixed at a predetermined position. The core member 7 is a dome-shaped steel plate arranged on upper end parts 6a, 6a of the stays 6, 6. The surface skin 5 is formed in a predetermined size with which the surface skin 5 can support, from the rear side, the head of the seater (not illustrated) seated on the seat cushion 3 and leaning back against the seat back 2. Also, the surface skin 5 has a hollow bag shape. The pad 8 is one obtained by foaming a foamable material made of a synthetic resin, such as polyurethane form, and filled in the space between the core member 7 and the surface skin 5. The foaming of the foamable material provides predetermined resilience to the surface skin 5.

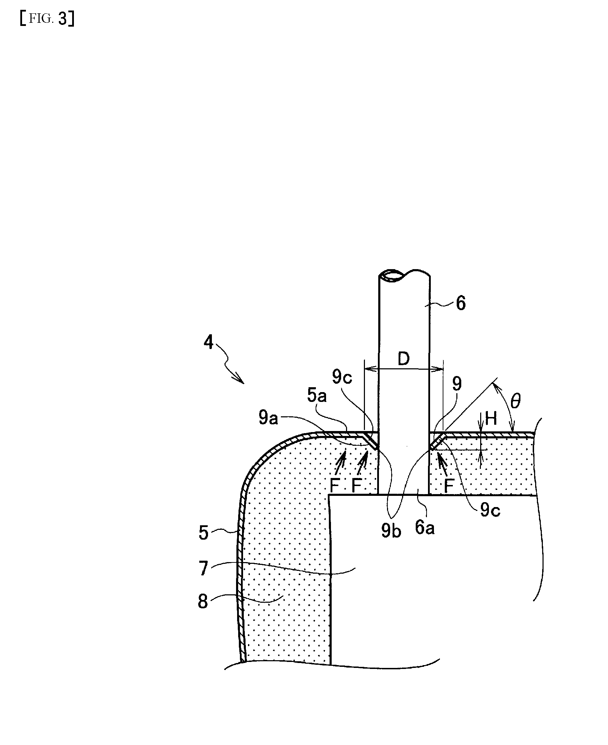

The surface skin 5 is formed of a non-breathable thermoplastic resin film of polyvinyl chloride of the like. In a lower surface part 5a of the surface skin 5, there is formed an opening 10 for inserting the stays 6, 6 and the core member 7 to the inside of the surface skin 5. As illustrated in Fig. 3, end parts 9 of the opening 10 arranged around the stays 6, 6 are each formed in such a way as to be raised inward (toward the inside of the surface skin 5) from the lower surface part 5a of the surface skin 5 by a predetermined distance H at an angle θ with a diameter D and come into contact with the outer peripheral surfaces of the stays 6, 6. Each end part 9 has a ring shape having an inclined surface 9c at the angle θ in a cross section. The predetermined distance H is, for example, 4 millimeters, the angle θ is, for example, 45 degrees, and the diameter D is, for example, 22 millimeters.

More specifically, an edge surface 9b which is one end of the inclined surface 9c and located at the edge of the end part 9 on the side raised by the predetermined distance H (the edge of the opening the stay 6 penetrates), is in endless contact with the outer peripheral surface of the stay 6. The edge surface 9b is set in advance in contact with the outer peripheral surface of the stay 6 with such force that the foamable material will not come out of the surface skin 5 due to the foaming pressure of the foamable material.

Next, the operation of this embodiment will be described.

In the head rest 4 according to this embodiment, even when the pressure from the foamable material of the pad 8 increases as it is foamed inside an unillustrated mold, thereby applying force to a back surface 9a of each end part 9 as indicated by reference sign F illustrated in Fig. 3, the end part 9 (edge surface 9b) of the opening 10 comes into contact and interferes with the outer peripheral surface of the corresponding one of the stays 6, 6, and the end part 9 of the opening 10 of the surface skin 5 does not move any further. Thus, the foamable material of the pad 8 does not go over the edge surface 9b of each end part 9 of the opening 10 of the surface skin 5 and come out of the surface skin 5. Since there is no residual matter (referred to as "debris") coming out, better appearance and improved quality of commodities are achieved. Since removal of the "debris" is not needed, no man-hour for such work is needed either. This brings about a practical advantage that the cost can be reduced.

During the foaming of the foamable material of the pad 8, changes in swelling direction are prevented from outside the surface skin 5 with the mold's protruding parts. Thus, only the endless edge surfaces 9b come into contact with the outer peripheral surfaces of the stays 6, 6. Accordingly, not only does the liquid foamable material not come out, but also the edge surfaces 9b are not visible from outside, and therefore the appearance is improved.

Even when the foaming pressure of the foamable material of the pad 8 increases, the end parts 9 (edge surfaces 9b) of the opening 10 come into pressure contact with the outer peripheral surfaces of the stays 6, 6, thereby stopping the surface skin 5 from moving any further. Thus, the foamable material of the pad 8 does not go over the surface skin 5 and come out.

In the above embodiment, the vehicle seat 1 to which to provide the head rest 4 is described by taking a seat for an automobile as an example. However, the present invention is not limited to this example and may be a seat mounted on an aircraft, a train, a ship, or the like.

Although an embodiment of the present invention has been described above, the present invention is not limited to the above embodiment and various modifications can be made thereto.

## Claims

1. A head rest, comprising:
a stay supported on an upper end part of a seat;
a hollow surface skin arranged on an upper end part of the stay and formed to have a size capable of supporting a head of a seater leaning back against the seat from a rear side of the head; and
a pad formed by foaming of a foamable material made of a synthetic resin injected in a space between the upper end part of the stay and the surface skin, and configured to provide resilience to the surface skin, wherein
in a lower surface part of the surface skin, the surface skin has an opening for the stay to be inserted into the surface skin, and
the opening has an end part arranged around the stay and formed to be raised from the lower surface part of the surface skin and come into contact with the stay.

2. The head rest according to claim 1, wherein the end part has an edge surface configured to come into endless contact with the stay.

3. The head rest according to claim 1, wherein the end part has:
an inclined surface inclined with respect to an axis direction of the stay; and
an edge surface located at an edge of the end part on a raised side being one end of the inclined surface, and configured to come into endless contact with an outer peripheral surface of the stay.

4. The head rest according to any one of claims 1 to 3, wherein
the stay is in a columnar shape, and
the end part is in a ring shape.

5. The head rest according to any one of claims 1 to 4, wherein the foamable material is made of a synthetic resin.
